# EUROPÄISCHE PATENTSCHRIFT

(11) **EP 2 462 529 B1**
(45) Veröffentlichungstag und Bekanntmachung des Hinweises auf die Patenterteilung: **30.11.2016**
(21) Anmeldenummer: 10734071.3
(22) Anmeldetag: 06.07.2010
(51) Int. Cl.: G06F 21/00

(54) **VERFAHREN ZUR AUSSTELLUNG EINES DIGITALEN ZERTIFIKATS DURCH EINE ZERTIFIZIERUNGSSTELLE, ANORDNUNG ZUR DURCHFÜHRUNG DES VERFAHRENS UND RECHNERSYSTEM EINER ZERTIFIZIERUNGSSTELLE**
METHOD FOR ISSUING A DIGITAL CERTIFICATE BY A CERTIFICATION AUTHORITY, ARRANGEMENT FOR PERFORMING THE METHOD, AND COMPUTER SYSTEM OF A CERTIFICATION AUTHORITY
PROCÉDÉ D'ÉTABLISSEMENT D'UN CERTIFICAT NUMÉRIQUE PAR UNE AUTORITÉ DE CERTIFICATION, AGENCEMENT DE MISE EN UVRE DU PROCÉDÉ ET SYSTÈME INFORMATIQUE D'UNE AUTORITÉ DE CERTIFICATION

(30) Priorität: 05.08.2009 DE 102009036179
(43) Veröffentlichungstag der Anmeldung: 13.06.2012
(73) Patentinhaber: Siemens Aktiengesellschaft, 80333 München (DE)
(72) Erfinder: BUSSER, Jens-Uwe, 81739 München (DE); FRIES, Steffen, 85598 Baldham (DE)
(86) Internationale Anmeldenummer: PCT/EP2010/059629
(87) Internationale Veröffentlichungsnummer: WO 2011/015414

(56) Entgegenhaltungen:
- EP-A1- 1 549 019
- US-A1- 2003 088 772
- US-A1- 2009 158 031
- US-B2- 6 993 651
- "Chapter 10: Identification and Entity Authentication ED - MENEZES A; OORSCHOT VAN P; VANSTONE S" [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP001525010 ISBN: 978-0-8493-8523-0 Gefunden im Internet: URL:http://www.cacr.math.uwaterloo.ca/hac/ ORD - 1996-10-00> Section 10.3
- "Chapter 12: Key Establishment Protocols ED - MENEZES A; OORSCHOT VAN P; VANSTONE S" [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , XP001525012 ISBN: 978-0-8493-8523-0 Gefunden im Internet: URL:http://www.cacr.math.uwaterloo.ca/hac/ ORD - 1996-10-00> Section 12.6
- HUGO KRAWCZYK ED - VICTOR SHOUP: "HMQV: A High-Performance Secure Diffie-Hellman Protocol" 1. Januar 2005 (2005-01-01), ADVANCES IN CRYPTOLOGY - CRYPTO 2005 LECTURE NOTES IN COMPUTER SCIENCE;;LNCS, SPRINGER, BERLIN, DE, PAGE(S) 546 - 566 , XP019016574 ISBN: 978-3-540-28114-6 Section 4

## Beschreibung

Die Erfindung betrifft ein Verfahren zur Ausstellung eines digitalen Zertifikats durch eine Zertifizierungsstelle, eine Anordnung zur Durchführung des Verfahrens und ein Rechnersystem einer Zertifizierungsstelle.

Beim initialen Aufsetzen von Sicherheitsparametern von Geräten, häufig auch als "Bootstrapping" bezeichnet, wird üblicher Weise durch ein Gerät selbst ein Schlüsselpaar mit einem öffentlichen und einem privaten Schlüssel erstellt. Mittels einer Anforderungs-Nachricht, welche in der Regel als Certificate Signing Request (kurz auch: CSR oder Certificate Request) ausgestaltet ist, kann der öffentliche Schlüssel durch eine Zertifizierungsstelle, häufig auch als Certification Authority (oder kurz CA) signiert werden. Der angesprochene Certificate Signing Request ist in RSC 2986, PKCS#10 definiert. Das Zertifikat wird anschließend an das Gerät gesendet und kann im Anschluss in Sicherheitsanwendungen benutzt werden, zum Beispiel um sich gegenüber einer Infrastruktur zu authentisieren. Unter dem Begriff "Gerät" sei hierbei und im Folgenden jegliche Komponente und jeglicher Dienst verstanden, welche für eine Zertifizierung durch eine Zertifizierungsstelle in Frage kommen.

Bei heute üblichen Verfahren zur Ausstellung eines digitalen Zertifikats durch eine Zertifizierungsstelle wird ein durch das Gerät erstellter öffentlicher Schlüssel PubKey A mittels eines von dem Gerät mit einem von ihm erstellten privaten Schlüssel PK A signierten CSR an die Zertifizierungsstelle geschickt. Durch Verifikation der Signatur prüft die Zertifizierungsstelle, ob das Gerät, welches den CSR gesendet hat, in Besitz des korrespondierenden privaten Schlüssels PK_A ist. Zusätzlich können Gerätedaten in sogenannten Attributen als Teil des CSR mitgeschickt werden, welche jedoch durch die Zertifizierungsstelle nicht verifizierbar sind.

Oftmals ist es jedoch nicht ausreichend nur nachzuprüfen, ob das Gerät, welches einen CSR gesendet hat, auch im Besitz des korrespondierenden privaten Schlüssels ist. Auf diese Weise lässt sich nämlich nur prüfen, ob ein Gerät in der Lage ist, einen signierten CSR zu versenden, wie er von Originalgeräten versendet wird. Die Originalität oder Echtheit des Gerätes selbst lässt sich jedoch mit den heute üblichen Verfahren nicht kontrollieren. Dieser Problematik wird häufig dadurch begegnet, dass der CSR auf sichere Weise, also zum Beispiel durch ein physikalisch getrenntes Netzwerk oder durch vertrauenswürdiges Servicepersonal auf Datenträgern, wie zum Beispiel USB-Sticks, transportiert wird, so dass auf diese Weise von der Zertifizierungsstelle nur für authentische CSRs und damit für Originalgeräte Zertifikate erstellt werden.

Die US 2003 / 0 088 772 A1 zeigt ein Verfahren zur Zertifizierung eines öffentlichen Schlüssels in einem lokalen Netzwerk. Die US 6 993 651 B2 zeigt ein System, bei welchen Diffie Hellmann zum Schlüsselaustausch genutzt wird.

Der Erfindung liegt die Aufgabe zugrunde, ein verbessertes Verfahren zur Ausstellung eines digitalen Zertifikats durch eine Zertifizierungsstelle anzugeben, bei welchem vor der Erstellung und dem Versand des Zertifikats auch die Echtheit oder Authentizität des Gerätes geprüft wird. Außerdem soll eine geeignete Anordnung zur Durchführung des Verfahrens sowie ein Rechnersystem einer Zertifizierungsstelle, welches zur Durchführung des Verfahrens auf Seite der Zertifizierungsstelle geeignet ist, angegeben werden.

Die Aufgabe wird gelöst durch ein Verfahren mit den Merkmalen des Patentanspruchs 1, eine Anordnung mit den Merkmalen des Patentanspruchs 9 und ein Rechnersystem mit den Merkmalen des Patentanspruchs 11.

Durch die Einbeziehung eines Dialogabschnittes zur Authentifizierung des Gerätes, welcher aus Anfrage und Antwort besteht und vorteilhaft auf einem Challenge-Response-Verfahren basiert, ist mit hoher Wahrscheinlichkeit sichergestellt, dass ein Zertifikat nur an originale oder authentische Geräte und nicht etwa an Plagiate vergeben wird. Im Gegensatz zu den bekannten Verfahren ist dazu jedoch kein sicherer zweiter Übertragungsweg erforderlich. Durch die erfindungsgemäße Ausgestaltung des Verfahrens ist die Anwendung von sogenannten Man-in-the-Middle-Attacken erheblich erschwert, da ein potentieller Angreifer nun zusätzlich in der Lage sein muss, die durch die Zertifizierungsstelle gesendete Anfrage korrekt zu beantworten, um ein Zertifikat zu erhalten.

Gemäß einer Ausführungsform der Erfindung erstellt das Gerät vor dem Senden der Anforderungs-Nachricht ein Schlüsselpaar mit einem ersten privaten Schlüssel und einem ersten öffentlichen Schlüssel, integriert diesen ersten öffentlichen Schlüssel in die Anforderungsnachricht und signiert die Anforderungs-Nachricht mit dem ersten privaten Schlüssel. Auf diese Weise erhält die Anforderungs-Nachricht die Form eines Certificate Signing Request, wie er in RFC2986, PKCS#10 definiert ist.

Basiert die Anfrage, welche vorteilhaft eine Challenge im Rahmen eines Challenge-Response-Verfahrens darstellt, auf einer Zufallszahl, kann die Wahrscheinlichkeit einer Manipulation weiter verringert werden.

Das asymmetrische Schlüsseletablierungsverfahren basierend auf dem Diffie-Hellman-Verfahren gewährleistet einen weiter erhöhten Sicherheitsstandard und hat gegenüber symmetrischen Verschlüsselungsverfahren den Vorteil, dass keine Vorkonfiguration der Zertifizierungsstelle erforderlich ist. Es sei aber ausdrücklich darauf hingewiesen, dass neben dem Diffie-Hellman-Verfahren auch asymmetrische Verschlüsselungsverfahren oder alternativ dazu auch symmetrische Verschlüsselungsverfahren für die Erfindung anwendbar sind.

Es ist vorgesehen, dass die Zertifizierungsstelle eine nur der Zertifizierungsstelle bekannte Zufallszahl y erzeugt und einen ersten Wert Y = g^{y} als Anfrage an das Gerät sendet, wobei g ein Generator nach dem Diffie-Hellman-Verfahren ist. Aus der empfangenen Anfrage Y berechnet das Gerät dann einen zweiten Wert Y^{x} und sendet diesen als Antwort an die Zertifizierungsstelle, wobei x ein nur dem Gerät bekannter dritter Wert ist. Die Zertifizierungsstelle berechnet schließlich einen vierten Wert X^{y}, wobei X = g^{x} ein sowohl dem Gerät als auch der Zertifizierungsstelle bekannter fünfter Wert ist, vergleicht diesen berechneten vierten Wert X^{y} mit dem empfangenen zweiten Wert Y^{x} und sendet das Zertifikat an das Gerät, falls der zweite und der vierte Wert übereinstimmen.

Durch diese, auf dem Diffie-Hellman-Verfahren basierende Datenkommunikation wird eine sichere, weil schwer angreifbare Authentifizierung des Gerätes im Kontext eines CSR realisiert.

Dabei fungiert der dritte Wert x als zweiter privater Schlüssel des Gerätes und der fünfte Wert X = g^{x} als zweiter öffentlicher Schlüssel des Gerätes. Verfügt das Gerät für den zweiten öffentlichen Schlüssel X über ein digitales Zertifikat, ist es vorteilhaft, dieses in die Anforderungs-Nachricht zu integrieren. Dadurch wird vermieden, dass die Zertifizierungsstelle den zweiten öffentlichen Schlüssel X im Voraus kennen muss.

Ist dem Gerät ein öffentlicher Schlüssel der Zertifizierungsstelle bekannt, so kann gemäß einer weiteren Ausführungsform der Erfindung die Anforderungs-Nachricht zur Ausstellung des Zertifikats an die Zertifizierungsstelle über eine HTTPS-Verbindung gesendet werden. Durch die Verwendung einer einseitig authentisierten HTTPS-Verbindung ist sichergestellt, dass das Gerät die Anforderungs-Nachricht nur zu der gewünschten Zertifizierungsstelle senden kann. Darüber hinaus ist sichergestellt, dass der jeweilige Kommunikationspartner nicht während des Zertifizierungsdialogs wechseln kann. Alternativ kann das Gerät mit dem öffentlichen Schlüssel der Zertifizierungsstelle direkt die Anforderungsnachricht verschlüsseln und an die Zertifizierungsstelle senden.

Gemäß einer Ausführungsform der Erfindung weist das Gerät einen Authentifizierungs-Chip auf, in welchem der zweite private und öffentliche Schlüssel abgespeichert sind. Derartige Chips werden beispielsweise bereits für den klassischen Plagiatschutz eingesetzt. Sie stellen damit eine einfache Möglichkeit dar, ein Gerät mit den zur Authentifizierung notwendigen zweiten Schlüsseln auszustatten.

Weitere Merkmale und Vorteile der Erfindung ergeben sich aus Ausführungsbeispielen, welche im Folgenden anhand der Zeichnungen erläutert werden. Es zeigen:
- Fig. 1: ein Signaldiagramm einer ersten Ausführungsform des erfindungsgemäßen Verfahrens, und
- Fig. 2: ein Signaldiagramm einer zweiten Ausführungsform des erfindungsgemäßen Verfahrens.

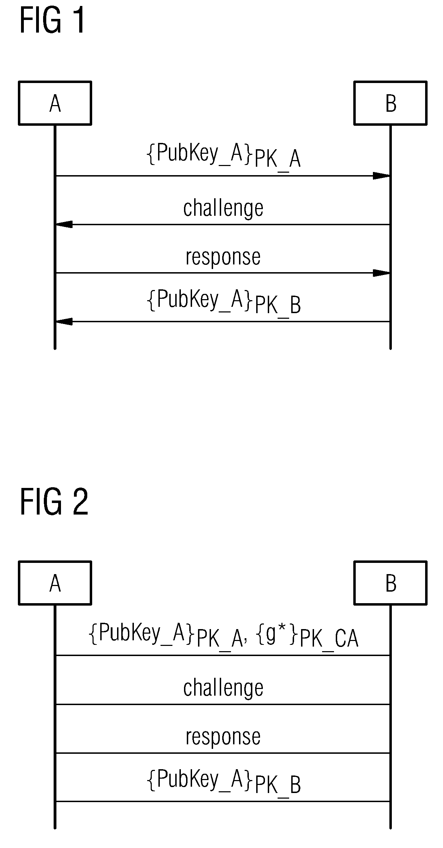

Gemäß der in Fig. 1 dargestellten ersten Ausführungsform der Erfindung sendet ein Gerät A zunächst eine Anforderungs-Nachricht, zum Beispiel in Form eines CSR gemäß RFC2986 an eine Zertifizierungsstelle B, wobei die Anforderungs-Nachricht im Falle eines CSR einen ersten öffentlichen Schlüssel PubKey_A des Geräts A beinhaltet und mit einem ersten privaten Schlüssel PK_A des Geräts A signiert ist. Diese ersten Schlüssel wurden im Vorfeld der Kommunikation durch das Gerät A selbst erstellt. Ist dem Gerät A ein öffentlicher Schlüssel der Zertifizierungsstelle B bekannt, so kann die Verbindung zur Zertifizierungsstelle B über eine einseitig authentisierte HTTPS-Verbindung realisiert werden. Nach Empfang der Anforderungs-Nachricht sendet die Zertifizierungsstelle B eine Anfrage zur Authentifizierung des Gerätes A an das Gerät A. Diese Anfrage stellt eine Challenge im Rahmen eines Challenge-Response-Verfahrens dar. Basiert dieses beispielsweise auf einem Diffie-Hellman-Verfahren, so kann als Anfrage oder Challenge ein erster Wert Y = g^{y} versendet werden, wobei g ein Generator nach dem Diffie-Hellman-Verfahren und y eine nur der Zertifizierungsstelle B bekannte Zufallszahl ist.

In Beantwortung der empfangenen Anfrage oder Challenge sendet das Gerät eine Antwort, welche eine Response im Sinne eines Challenge-Response-Verfahrens darstellt, an die Zertifizierungsstelle B zurück. Basiert das Challenge-Response-Verfahren auf einem Diffie-Hellman-Verfahren, so berechnet das Gerät aus der empfangenen Anfrage Y einen zweiten Wert Y^{x} und sendet diesen als Antwort oder Response an die Zertifizierungsstelle B zurück. Dabei ist x ein nur dem Gerät bekannter dritter Wert. Dieser ist vorteilhaft in einem, in dem Gerät vorgesehenen Authentifizierungs-Chip abgespeichert.

Die Zertifizierungsstelle B prüft nun die empfangene Antwort oder Response und erstellt und sendet das Zertifikat an das Gerät, falls die Antwort als korrekt identifiziert wird. Das Zertifikat umfasst dabei den ersten öffentlichen Schlüssel, welcher durch die Zertifizierungsstelle B signiert wurde. Im Fall des beispielhaft beschriebenen Diffie-Hellmann-Ansatzes wird die Prüfung dadurch realisiert, dass die Zertifizierungsstelle B einen vierten Wert X^{y} berechnet, wobei X = g^{x} ein sowohl dem Gerät A als auch der Zertifizierungsstelle B bekannter fünfter Wert ist, diesen berechneten vierten Wert X^{y} mit dem empfangenen zweiten Wert Y^{x} vergleicht und das Zertifikat in Form des durch einen privaten Schlüssel PK_B der Zertifizierungsstelle B signierten ersten öffentlichen Schlüssel PubKey_A des Gerätes A nur dann an das Gerät A sendet, falls der zweite und der vierte Wert übereinstimmen. Das von der Zertifizierungsstelle ausgestellt Zertifikat kann dann neben dem ersten öffentlichen Schlüssel PubKey_A auch den zweiten öffentlichen Schlüssel X zur Überprüfung der Echtheit des Gerätes enthalten.

Es sei nochmals darauf hingewiesen, dass das beschriebene, auf dem Diffie-Hellman-Verfahren beruhende Authentifizierungs-Verfahren lediglich als beispielhaft anzusehen ist. Für das erfindungsgemäße Verfahren ist es lediglich erforderlich, dass eine durch die Zertifizierungsstelle B an das Gerät A gesendete Anfrage oder Challenge durch das Gerät A korrekt beantwortet wird und somit die Authentizität des Geräts A nachgewiesen wird.

Die in Fig. 2 dargestellte zweite Ausführungsform des erfindungsgemäßen Verfahrens unterscheidet sich von der in Fig. 1 dargestellten Ausführungsform lediglich dadurch, dass die Anforderungs-Nachricht neben dem ersten öffentlichen Schlüssel PubKey_A des Gerätes A auch ein Zertifikat {g^{x}}_{PK_CA} zum zweiten öffentlichen Schlüssel umfasst. Dazu muss das Gerät A selbstverständlich einen zu dem zweiten öffentlichen Schlüssel des Gerätes A passendes Zertifikat besitzen, das von der gleichen Zertifizierungsstelle B oder auch einer beliebigen anderen, aber selbstverständlich vertrauenswürdigen Zertifizierungsstelle CA ausgestellt worden sein kann. Auf diese Weise ist es nicht mehr erforderlich, dass die Zertifizierungsstelle B den zweiten öffentlichen Schlüssel des Gerätes A im Vorfeld der Kommunikation kennt.

## Patentansprüche

1. Verfahren zur Ausstellung eines digitalen Zertifikats durch eine Zertifizierungsstelle (B), bei dem
- ein Gerät (A) eine Anforderungs-Nachricht zur Ausstellung des Zertifikats an die Zertifizierungsstelle (B) sendet,
- die Zertifizierungsstelle (B) die Anforderungs-Nachricht empfängt und eine Anfrage zur Authentifizierung des Geräts (A) an das Gerät (A) sendet,
- das Gerät (A) in Beantwortung der empfangenen Anfrage eine Antwort an die Zertifizierungsstelle (B) sendet und
- die Zertifizierungsstelle (B) die empfangene Antwort prüft und das Zertifikat erstellt und an das Gerät (A) sendet, falls die Antwort als korrekt identifiziert wurde;
wobei die Erzeugung der Anfrage und der Antwort auf einem Diffie-Hellman-Verfahren beruht, und wobei
- die Zertifizierungsstelle (B) eine nur der Zertifizierungsstelle bekannte Zufallszahl y erzeugt und einen ersten Wert Y = g^{y} als Anfrage an des Gerät (A) sendet, wobei g ein Generator nach dem Diffie-Hellman-Verfahren ist,
- das Gerät (A) aus der empfangenen Anfrage Y einen zweiten Wert Y^{x} berechnet und diesen als Antwort an die Zertifizierungsstelle (B) sendet, wobei x ein nur dem Gerät (A) bekannter dritter Wert ist, und
- die Zertifizierungsstelle (B) einen vierten Wert X^{y} berechnet, wobei X = g^{x} ein sowohl dem Gerät (A) als auch der Zertifizierungsstelle (B) bekannter fünfter Wert ist, den berechneten vierten Wert X^{y} mit dem empfangenen zweiten Wert Y^{x} vergleicht und das Zertifikat an das Gerät (A) sendet, falls der zweite und der vierte Wert übereinstimmen.

2. Verfahren nach Anspruch 1,
**dadurch gekennzeichnet,**
**dass** die Authentifizierung des Geräts (A) auf einem Challenge-Response-Verfahren basiert.

3. Verfahren nach einem der Ansprüche 1 oder 2,
**dadurch gekennzeichnet,**
**dass** das Gerät (A) vor dem Senden der Anforderungs-Nachricht ein Schlüsselpaar mit einem ersten privaten Schlüssel und einem ersten öffentlichen Schlüssel erstellt und die Anforderungs-Nachricht den ersten öffentlichen Schlüssel enthält und mit dem ersten privaten Schlüssel des Gerätes (A) signiert wird.

4. Verfahren nach einem der Ansprüche 1 bis 3,
**dadurch gekennzeichnet,**
**dass** die Anfrage auf einer Zufallszahl basiert.

5. Verfahren nach Anspruch 1,
**dadurch gekennzeichnet,**
**dass** der dritte Wert x als zweiter privater Schlüssel des Geräts (A) fungiert und der fünfte Wert X = g^{x} als zweiter öffentlicher Schlüssel des Geräts (A) fungiert.

6. Verfahren nach Anspruch 5,
**dadurch gekennzeichnet,**
**dass** das Gerät (A) für den zweiten öffentlichen Schlüssel X über ein weiteres digitales Zertifikat verfügt und die Anforderungs-Nachricht dieses weitere Zertifikat enthält.

7. Verfahren nach einem der vorhergehenden Ansprüche, **dadurch gekennzeichnet,**
**dass** dem Gerät (A) ein weiterer öffentlicher Schlüssel der Zertifizierungsstelle (B) bekannt ist und die Anforderungs-Nachricht über eine HTTPS-Verbindung an die Zertifizierungsstelle (B) gesendet wird.

8. Verfahren nach einem der vorhergehenden Ansprüche, **dadurch gekennzeichnet,**
**dass** dem Gerät (A) ein weiterer öffentlicher Schlüssel der Zertifizierungsstelle (B) bekannt ist und die Anforderungs-Nachricht verschlüsselt mit dem öffentlichen Schlüssel der Zertifizierungsstelle (B) an die Zertifizierungsstelle (B) gesendet wird.

9. Anordnung zur Durchführung eines Verfahrens gemäß einem der Ansprüche 1 bis 8 mit
- einem Gerät (A) zum Senden einer Anforderungs-Nachricht zur Ausstellung eines digitalen Zertifikats, zum Empfangen einer Anfrage zur Authentifizierung und zum Senden einer Antwort in Beantwortung der empfangenen Anfrage und
- einer Zertifizierungsstelle (B) zum Empfangen der Anforderungs-Nachricht, zum Senden einer Anfrage zur Authentifizierung, zum Prüfen der empfangenen Antwort und zum Erstellen und Senden des Zertifikats, falls die Antwort als korrekt identifiziert wird;
wobei die Erzeugung der Anfrage und der Antwort auf einem Diffie-Hellman-Verfahren beruht, und wobei
- die Zertifizierungsstelle (B) eine nur der Zertifizierungsstelle bekannte Zufallszahl y erzeugt und einen ersten Wert Y = g^{y} als Anfrage an des Gerät (A) sendet, wobei g ein Generator nach dem Diffie-Hellman-Verfahren ist,
- das Gerät (A) aus der empfangenen Anfrage Y einen zweiten Wert Y^{x} berechnet und diesen als Antwort an die Zertifizierungsstelle (B) sendet, wobei x ein nur dem Gerät (A) bekannter dritter Wert ist, und
- die Zertifizierungsstelle (B) einen vierten Wert X^{y} berechnet, wobei X = g^{x} ein sowohl dem Gerät (A) als auch der Zertifizierungsstelle (B) bekannter fünfter Wert ist, den berechneten vierten Wert X^{y} mit dem empfangenen zweiten Wert Y^{x} vergleicht und das Zertifikat an das Gerät (A) sendet, falls der zweite und der vierte Wert übereinstimmen.

10. Anordnung gemäß Anspruch 9,
**dadurch gekennzeichnet,**
**dass** das Gerät (A) einen Authentifizierungs-Chip aufweist, in welchem der zweite private und der zweite öffentliche Schlüssel des Geräts (A) abgespeichert sind.

11. Rechnersystem einer Zertifizierungsstelle (B) ausgebildet und programmiert zur Durchführung des Verfahrens nach einem der Ansprüche 1 bis 8 auf Seite der Zertifizierungsstelle mit
- einem Empfangsmodul zum Empfangen von Anforderungs-Nachrichten und Antworten,
- einem Sendemodul zum Senden von Anfragen zur Authentifizierung und eines digitalen Zertifikats
- einem Prüfmodul zum Prüfen der Antworten und
- einem Zertifizierungsmodul zum Erstellen des Zertifikats; wobei die Erzeugung der Anfrage und der Antwort auf einem Diffie-Hellman-Verfahren beruht, und wobei
- die das Rechnersystem der Zertifizierungsstelle (B) eine nur der Zertifizierungsstelle bekannte Zufallszahl y erzeugt und einen ersten Wert Y = g^{y} als Anfrage an des Gerät (A) sendet, wobei g ein Generator nach dem Diffie-Hellman-Verfahren ist,
- ein Gerät (A) aus der empfangenen Anfrage Y einen zweiten Wert Y^{x} berechnet und diesen als Antwort an die Zertifizierungsstelle (B) sendet, wobei x ein nur dem Gerät (A) bekannter dritter Wert ist, und
- die Zertifizierungsstelle (B) einen vierten Wert X^{y} berechnet, wobei X = g^{x} ein sowohl dem Gerät (A) als auch der Zertifizierungsstelle (B) bekannter fünfter Wert ist, den berechneten vierten Wert X^{y} mit dem empfangenen zweiten Wert Y^{x} vergleicht und das Zertifikat an das Gerät (A) sendet, falls der zweite und der vierte Wert übereinstimmen.

## Claims

1. Method for issuing a digital certificate by a certification authority (B), wherein
- a device (A) sends a request message for the issuing of the certificate to the certification authority (B),
- the certification authority (B) receives the request message and sends a challenge to the device (A) for the purpose of authenticating the device (A),
- the device (A) sends a response to the certification authority (B) in answer to the received challenge, and
- the certification authority (B) checks the received response and generates and sends the certificate to the device (A) if the response was identified as correct;
wherein the generation of the challenge and response is based on a Diffie-Hellman method, and wherein
- the certification authority (B) generates a random number y that is known only to the certification authority and sends a first value Y = g^{y} as challenge to the device (A), wherein g is a generator in accordance with the Diffie-Hellman method,
- the device (A) calculates a second value Y^{x} from the received challenge Y and sends said second value Y^{x} as response to the certification authority (B), wherein x is a third value that is known only to the device (A), and
- the certification authority (B) calculates a fourth value X^{y}, where X = g^{x} is a fifth value that is known both to the device (A) and also to the certification authority (B), compares the calculated fourth value X^{y} with the received second value Y^{x} and sends the certificate to the device (A) if the second and the fourth value match.

2. Method according to claim 1,
**characterised in that**
the authentication of the device (A) is based on a challenge-response method.

3. Method according to one of claims 1 or 2,
**characterised in that**
before sending the request message the device (A) generates a key pair comprising a first private key and a first public key and the request message contains the first public key and is signed with the first private key of the device (A).

4. Method according to one of claims 1 to 3,
**characterised in that**
the challenge is based on a random number.

5. Method according to claim 1,
**characterised in that**
the third value x acts as a second private key of the device (A) and the fifth value X = g^{x} acts as a second public key of the device (A).

6. Method according to claim 5,
**characterised in that**
the device (A) possesses a further digital certificate for the second public key X and the request message contains said further certificate.

7. Method according to one of the preceding claims, **characterised in that**
a further public key of the certification authority (B) is known to the device (A) and the request message is sent to the certification authority (B) via an HTTPS connection.

8. Method according to one of the preceding claims, **characterised in that**
a further public key of the certification authority (B) is known to the device (A) and the request message is sent to the certification authority (B) encrypted with the public key of the certification authority (B).

9. Arrangement for performing a method according to one of claims 1 to 8, comprising
- a device (A) for sending a request message for the issuing of a digital certificate, for receiving a challenge for authentication purposes, and for sending a response in answer to the received challenge, and
- a certification authority (B) for receiving the request message, for sending a challenge for authentication purposes, for checking the received response, and for generating and sending the certificate if the response is identified as correct;
wherein the generation of the challenge and response is based on a Diffie-Hellman method, and wherein
- the certification authority (B) generates a random number y that is known only to the certification authority and sends a first value Y = g^{y} as challenge to the device (A), wherein g is a generator in accordance with the Diffie-Hellman method,
- the device (A) calculates a second value Y^{x} from the received challenge Y and sends said second value Y^{x} as response to the certification authority (B), where x is a third value that is known only to the device (A), and
- the certification authority (B) calculates a fourth value X^{y}. where X = g^{x} is a fifth value that is known both to the device (A) and also to the certification authority (B), compares the calculated fourth value X^{y} with the received second value Y^{x} and sends the certificate to the device (A) if the second and the fourth value match.

10. Arrangement according to claim 9,
**characterised in that**
the device (A) has an authentication chip in which the second private and the second public key of the device (A) are stored.

11. Computer system of a certification authority (B), which computer system is embodied and programmed for performing the method according to one of claims 1 to 8 on the certification authority side, comprising
- a receive module for receiving request messages and responses,
- a transmit module for sending challenges for authentication purposes and a digital certificate,
- a check module for checking the responses, and
- a certification module for generating the certificate; wherein the generation of the challenge and response is based on a Diffie-Hellman method, and wherein
- the computer system of the certification authority (B) generates a random number y that is known only to the certification authority and sends a first value Y = g^{y} as challenge to the device (A), wherein g is a generator in accordance with the Diffie-Hellman method,
- a device (A) calculates a second value Y^{x} from the received challenge Y and sends said second value Y^{x} as response to the certification authority (B), where x is a third value that is known only to the device (A), and
- the certification authority (B) calculates a fourth value X^{y}, where X = g^{x} is a fifth value that is known both to the device (A) and also to the certification authority (B), compares the calculated fourth value X^{y} with the received second value Y^{x} and sends the certificate to the device (A) if the second and the fourth value match.

## Revendications

1. Procédé d'établissement d'un certificat numérique par une autorité de certification (B), dans lequel
- un appareil (A) envoie un message de requête pour l'établissement du certificat à l'autorité de certification (B),
- l'autorité de certification (B) reçoit le message de requête et envoie une demande d'authentification de l'appareil (A) à l'appareil (A),
- l'appareil (A) envoie, en réponse à la demande reçue, une réponse à l'autorité de certification (B) et
- l'autorité de certification (B) vérifie la réponse reçue et établit le certificat et l'envoie à l'appareil (A), dans le cas où la réponse a été identifiée comme correcte;
dans lequel la production de la demande et de la réponse repose sur un protocole Diffie-Hellman, et dans lequel
- l'autorité de certification (B) produit un nombre aléatoire y connu uniquement de l'autorité de certification et envoie comme demande à l'appareil (A) une première valeur Y = g^{y}, g étant un générateur selon le protocole Diffie-Hellman,
- l'appareil (A) calcule à partir de la demande reçue Y une deuxième valeur Y^{x} et envoie celle-ci comme réponse à l'autorité de certification (B), x étant une troisième valeur connue uniquement de l'appareil (A), et
- l'autorité de certification (B) calcule une quatrième valeur X^{y}, X = g^{x} étant une cinquième valeur connue aussi bien de l'appareil (A) que de l'autorité de certification (B), compare la quatrième valeur calculée X^{y} avec la deuxième valeur reçue Y^{x} et envoie le certificat à l'appareil (A), dans le cas où la deuxième valeur et la quatrième valeur concordent.

2. Procédé selon la revendication 1, **caractérisé en ce que** l'authentification de l'appareil (A) est basée sur un protocole question-réponse.

3. Procédé selon l'une des revendications 1 ou 2, **caractérisé en ce que** l'appareil (A) établit, avant l'envoi du message de requête, une paire de clés avec une première clé privée et une première clé publique et le message de requête contient la première clé publique et est signé avec la première clé privée de l'appareil (A).

4. Procédé selon l'une quelconque des revendications 1 à 3, **caractérisé en ce que** la demande est basée sur un nombre aléatoire.

5. Procédé selon la revendication 1, **caractérisé en ce que** la troisième valeur x fait office de deuxième clé privée de l'appareil (A) et la cinquième valeur X = g^{x} fait office de deuxième clé publique de l'appareil (A).

6. Procédé selon la revendication 5, **caractérisé en ce que** l'appareil (A) dispose d'un autre certificat numérique pour la deuxième clé publique X et le message de requête contient cet autre certificat.

7. Procédé selon l'une quelconque des revendications précédentes, **caractérisé en ce qu'**une autre clé publique de l'autorité de certification (B) est connue de l'appareil (A) et le message de requête est envoyé à l'autorité de certification (B) via une liaison HTTPS.

8. Procédé selon l'une quelconque des revendications précédentes, **caractérisé en ce qu'**une autre clé publique de l'autorité de certification (B) est connue de l'appareil (A) et le message de requête est envoyé à l'autorité de certification (B) sous forme codée avec la clé publique de l'autorité de certification (B).

9. Agencement pour la mise en oeuvre d'un procédé selon l'une quelconque des revendications 1 à 8, avec
- un appareil (A) pour l'envoi d'un message de requête en vue de l'établissement d'un certificat numérique, pour la réception d'une demande d'authentification et pour l'envoi d'une réponse en réponse à la demande reçue, et
- une autorité de certification (B) pour la réception du message de requête, pour l'envoi d'une demande d'authentification, pour le contrôle de la réponse reçue et pour l'établissement et l'envoi du certificat, dans le cas où la réponse a été identifiée comme correcte;
dans lequel la production de la demande et de la réponse repose sur un protocole Diffie-Hellman, et dans lequel
- l'autorité de certification (B) produit un nombre aléatoire y connu uniquement de l'autorité de certification et envoie comme demande à l'appareil (A) une première valeur Y = g^{y}, g étant un générateur selon le protocole Diffie-Hellman,
- l'appareil (A) calcule à partir de la demande reçue Y une deuxième valeur Y^{x} et envoie celle-ci comme réponse à l'autorité de certification (B), x étant une troisième valeur connue uniquement de l'appareil (A), et
- l'autorité de certification (B) calcule une quatrième valeur X^{y}, X = g^{x} étant une cinquième valeur connue aussi bien de l'appareil (A) que de l'autorité de certification (B), compare la quatrième valeur calculée X^{y} avec la deuxième valeur reçue Y^{x} et envoie le certificat à l'appareil (A), dans le cas où la deuxième valeur et la quatrième valeur concordent.

10. Agencement selon la revendication 9, **caractérisé en ce que** l'appareil (A) présente une puce d'authentification, dans laquelle la deuxième clé privée et la deuxième clé publique de l'appareil (A) sont stockées.

11. Système informatique d'une autorité de certification (B) configuré et programmé pour la mise en oeuvre du procédé selon l'une quelconque des revendications 1 à 8 du côté de l'autorité de certification, avec
- un module de réception pour la réception de messages de requête et de réponses,
- un module d'envoi pour l'envoi de demandes d'authentification et d'un certificat numérique,
- un module de contrôle pour le contrôle des réponses, et
- un module de certification pour l'établissement du certificat; dans lequel la production de la demande et de la réponse repose sur un protocole Diffie-Hellman, et dans lequel
- le système informatique de l'autorité de certification (B) produit un nombre aléatoire y connu uniquement de l'autorité de certification et envoie comme demande à l'appareil (A) une première valeur Y = g^{y}, g étant un générateur selon le protocole Diffie-Hellman,
- un appareil (A) calcule à partir de la demande reçue Y une deuxième valeur Y^{x} et envoie celle-ci comme réponse à l'autorité de certification (B), x étant une troisième valeur connue uniquement de l'appareil (A), et
- l'autorité de certification (B) calcule une quatrième valeur X^{y}, X = g^{x} étant une cinquième valeur connue aussi bien de l'appareil (A) que de l'autorité de certification (B), compare la quatrième valeur calculée X^{y} avec la deuxième valeur reçue Y^{x} et envoie le certificat à l'appareil (A), dans le cas où la deuxième valeur et la quatrième valeur concordent.
